# EUROPEAN PATENT SPECIFICATION

(11) **EP 2 742 168 B1**
(45) Date of publication and mention of the grant of the patent: **06.01.2021**
(21) Application number: 12753084.8
(22) Date of filing: 06.08.2012
(51) Int. Cl.: C23C 18/54, H01H 1/02, H01H 1/58, H01R 13/02, H01R 13/03

(54) **METHOD FOR IMPROVING THE TRANSITION RESISTANCE IN AN ELECTRICAL CONNECTION BETWEEN TWO CONTACT ELEMENTS AND COMPONENT HAVING AN ELECTRICAL CONNECTION BETWEEN TWO CONTACT ELEMENTS**
VERFAHREN ZUR VERBESSERUNG DES ÜBERGANGSWIDERSTANDES IN EINER ELEKTRISCHEN VERBINDUNG ZWISCHEN ZWEI KONTAKTELEMENTEN UND BAUTEIL MIT EINER ELEKTRISCHEN VERBINDUNG ZWISCHEN ZWEI KONTAKTELEMENTEN
PROCÉDÉ PERMETTANT D'AMÉLIORER LA RÉSISTANCE DE TRANSITION D'UNE CONNEXION ÉLECTRIQUE ENTRE DEUX ÉLÉMENTS DE CONTACT ET COMPOSANT PRÉSENTANT UNE CONNEXION ÉLECTRIQUE ENTRE DEUX ÉLÉMENTS DE CONTACT

(30) Priority: 08.08.2011 DE 102011052499
(43) Date of publication of application: 18.06.2014
(73) Proprietor: TE Connectivity Germany GmbH, 64625 Bensheim (DE)
(72) Inventor: BLUEMMEL, Uwe, 69502 Hemsbach (DE); SCHMIDT, Helge, 67346 Speyer (DE)
(74) Representative: Grünecker Patent- und Rechtsanwälte PartG mbB
(86) International application number: PCT/EP2012/065329
(87) International publication number: WO 2013/020947

(56) References cited:
- WO-A1-2012/159917
- US-A- 5 225 066
- US-A1- 2010 101 831

## Description

The invention relates to a method for improving the transition resistance in an electrical connection, in particular a pressure connection, between two contact elements. The invention further relates to a component comprising two contact elements between which there is an electrical connection, specifically a pressure connection, in particular a crimp connection between a wire and a crimp contact.

Connections between two electrically conductive contact elements, in particular connections which are produced by means of plastic deformation, for example pinching, of at least one contact element, such as, for example, connections between a wire or a strand and a crimp element, may have a transition resistance which increases greatly over time. In particular if the contact elements are subjected to mechanical influences, such as, for example, movements or tensile/bending loads, or thermal loads, such as, for example, constantly changing temperatures, and/or the wires have a small cross-section and/or comprise a soft material, this effect is increasingly evident. Owing to the increasing transition resistance, a connected electrical circuit can be impaired in terms of its function or fail.

The invention is intended in particular to provide a connection which is stable over a long period of time and which has no significant increase in transition resistance, even after several hundred cold/warm cycles with tensile loading. Such loading is simulated, for example, by means of the Slow Motion Bending Test (SMBT) which is used as a standard test in the automotive industry.

In order to produce such a durably stable electrical connection between two components, a solder connection is often used. However, the production of this connection causes a thermal load for the components. Furthermore, many solders contain heavy metals and thus constitute a source of environmental pollution. The operational expenditure for producing such a solder connection is also relatively great.

From WO 2012/159917 A1, which is only relevant under Article 54(3) EPC, an electrical contact element with a cover layer into which a chemical reducing agent is integrated, is known.

US 5,225,066 sets out a method for producing a long-term stable electrical connection between a wire and a crimp contact, the materials of the wire and the crimp contact having to have different redox potentials. After an electrolyte has been introduced between the wire and crimp contact, a migration of a metal through the electrolyte to the other metal begins and bridging metal connections are produced between the wire and crimp contact. To this end, it is necessary for the wire, the crimp contact and electrolyte to be in contact at the same time. A connection between two contact elements, which are produced from materials with similar or the same redox potential, in particular from the same material, is consequently possible only with difficulty or not at all.

An object of the invention is consequently to produce a particularly long-term stable electrical connection between two contact elements which are connected by means of plastic deformation, for example, by means of crimping, only in a positive-locking manner or non-positive-locking manner but not in a materially engaging manner, in particular even when the contact elements comprise materials with a similar or the same redox potential, a thermal load or a danger for the environment being intended to be eliminated.

The object is achieved according to the invention in that a chemically reducing substance is applied to at least one contact face of a contact element.

Owing to this measure, an oxide layer which is present on the contact face is reduced and the conductivity and the cold welding density are increased.

In contrast to the methods described in the prior art, it is not necessary for the two contact elements and the substance to be in contact at the same time. Each of the contact elements can be processed individually.

It is further possible to connect two contact elements which comprise materials with similar or the same redox potential, in particular which comprise the same material.

The solution according to the invention can be combined as desired and further improved with the following additional configurations which are advantageous per se.

In order to control the effect, the chemically reducing substance can be diluted. This can reduce costs. In addition, other substances which have additional effects can be introduced into the chemically reducing substance or the solvent. For example, such additives may have a degreasing or conductive effect.

The application of the chemically reducing substance can be carried out using various techniques, for example, pressure, dipping, spraying or painting technologies. In particular, it may be advantageous for the contact face to be processed only selectively with the substance since time and material are thereby saved.

The chemically reducing substance may remain on the contact face, which saves an additional step for removing the substance. It is thereby possible to reduce the time, operating and cost expenditure. In particular when the substance is applied to only one contact face and this takes place before the contacting step, the expenditure is limited to a minimum. Owing to the fact that the substance remains in the connection, renewed oxidation of the contact faces, a contamination or the infiltration of fluids such as, for example, water, is prevented. Nonetheless, it may be advantageous with many applications for the reducing substance to be removed prior to the contacting step. In order to prevent intermediate oxidation of the surface, it is necessary in this case for the period of time between removing the chemically reducing substance and the contacting step to be kept as short as possible or for the intermediate operating steps to take place in an oxygen-free atmosphere.

In order to reduce the time expenditure during assembly, the application of the chemically reducing substance can be carried out at the same time as the contacting step, for example, the pinching operation. For example, it is possible to apply the chemically reducing substance to one of the contact faces using a micrometering device.

The chemically reducing substance may also already be applied during the production of the contact elements or in a previous operating step. For example, wires may already contain the chemically reducing substance or it may be contained in punching oil which is used, for example, in the production of crimp contacts.

The chemically reducing substance may be an acid. Owing to the acid, a contact face of a contact element, in particular in the case of metals, is etched and the surface roughened, which further increases the active surface-area and consequently further increases the cold welding density. Furthermore, there are ions in the acid so that an electrical conductivity is ensured between the contact faces, even when the chemically reducing substance remains on the contact faces after the active step. In particular mineral acids have a distinct acidic character and therefore lead to a powerful etching effect with, at the same time, a high concentration of ions.

In an advantageous embodiment of the method, an organic acid is used as a chemically reducing substance. This affords the advantage that it is generally non-toxic for humans and the environment. Furthermore, organic acids are usually only weakly acidic, which prevents the contact faces, which in most cases comprise metal, from being attacked in an unnecessarily excessive manner. Organic acids are usually also simple to produce and store, with few safety requirements. In particular, the use of long-chain organic acids may be advantageous since they have no smell and are in most cases cream-like or wax-like. This consistency in combination with the low acid strength makes them particularly suitable for applications in which the chemically reducing substance is intended to remain in the connection. Examples of such organic acids are palm oil acid, fatty acid, pimelic acid, adipic acid, glutaric acid, malonic acid and Bernstein acid.

It is particularly advantageous for the chemically reducing substance to have a plurality of functional groups which have a reducing effect since the effect is thereby increased.

The chemically reducing substance may be only weakly acidic or weakly alkaline, that is to say, its pH value is in the range from 4.5 to 9.5. This affords the advantage that, in spite of the reducing effect on the oxide layer, the contact face which lies underneath, usually a metal, is attacked only very slightly. Consequently, even with relatively long action, for example, when the chemically reducing substance remains in the connection, an effect occurs which can be well controlled.

In an advantageous embodiment of the method, the chemically reducing substance is a fluxing agent. These are widespread and widely known in electrics and electronics for producing solder connections. There is consequently already wide knowledge regarding the properties, in particular the tolerance with various materials. The selection of a fluxing agent can thus be coordinated with the contact elements to be connected. Such fluxing agents, in addition to chemically reducing substances, may further contain other substances or have other advantageous properties. For example, fluxing agents may further have a degreasing effect, which further improves the electrical connection between the contact elements. However, in contrast to solder connections, the connecting contact elements are not subsequently connected in a materially integral manner by means of additional soldering. In particular, it is not necessary to heat the connection location.

In order to ensure an electrical connection, in particular when the chemically reducing substance remains on the contact faces, it is advantageous for it to be electrically conductive at the same time. For example, it may contain ions or other free charge carriers or additional electrically conductive particles may be embedded in the substance. For example, acids or electrolytes appear to be particularly suitable. The ions of free charge carriers may also be produced only owing to the reaction with the oxide layer.

According to an advantageous embodiment of the method, the chemically reducing substance has a cream-like or wax-like consistency. This facilitates the application of the substance and ensures that the substance remains on the contact face during the remainder of the process and does not drip or evaporate. In particular when there is a relatively long period of time between applying the substance and the connection step, it is consequently ensured that there is still sufficient chemically reducing substance on the contact face. The consistency may either be an inherent property of the chemically reducing substance, for instance, owing to a long-chained or branched chemical structure, or may be achieved by the addition of substances which increase or decrease the consistency. For example, thickening agents or solvents can be added. Owing to production specifications, a harder consistency may also be desired. It may also be desirable for the substance to be in a liquid form, which facilitates, for example, the application or removal of the substance.

In a particularly advantageous embodiment of the method, the chemically reducing substance may be encapsulated in submillimetre or submicrometre balls which break open under pressure. Consequently, it is possible to achieve a state in which the chemically reducing substance may first appear during a pinching operation and consequently act only on the contact faces. In addition, it is thereby ensured that the smallest possible amount of the chemically reducing substance is wasted.

In order to improve the transition resistance, it is possible alternatively or in addition to clean or activate at least one contact face of a contact element by means of plasma beam cleaning.

The invention is explained in greater detail below by way of example with reference to advantageous embodiments and the drawings. The embodiments described only constitute possible embodiments in which, however, the individual features as described above can be implemented independently of each other or omitted.

In the drawings:
Figure 1 is a schematic, perspective view of a method configured according to the invention;
Figure 2 is a schematic sectioned drawing through a component which has been processed using the method according to the invention.

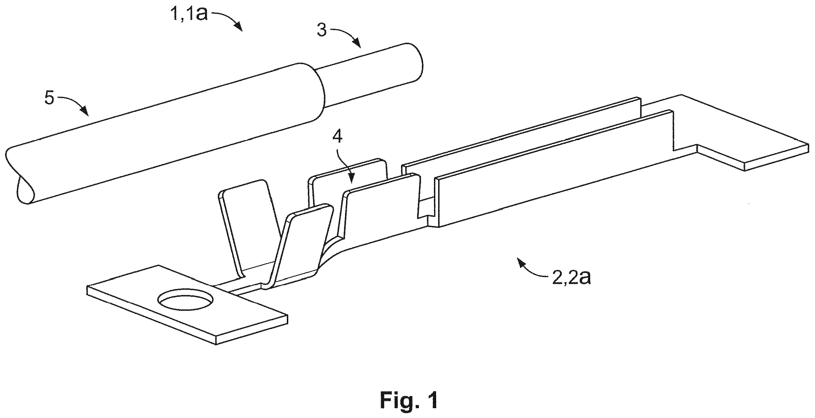

The method according to the invention is first explained with reference to Figure 1. A first contact element 1, illustrated in this instance as wire 1a, is intended to be brought into electrical contact in the region of the contact face 3 thereof with a second contact element 2, illustrated in this instance as a crimp element 2a, by the contact face 3 of the first contact element 1 being brought into connection with the contact face 4 of the second contact element 2. The first contact element 1 has in addition to the contact face 3 another insulating region 5. The electrical connection between the first contact element 1 and the second contact element 2 is produced by the contact face of the first contact element 3 being positioned in the contact face of the second contact element 4 and subsequently the contact face of the second contact element 4 being bent by means of plastic deformation, for example pinching, around the contact face of the first contact element 3. According to the invention, a chemically reducing substance is applied to at least one of the contact faces 3, 4. This can be carried out in particular before or during the contacting.

The chemically reducing substance 6 may be applied using a variety of technologies. For example, it may be applied to one of the contact faces 3, 4 by means of pressure, dipping, spraying or painting technologies.

In order to keep time and material expenditure low, and treat only a small surface, these technologies may also be used selectively only on part-regions of one of the contact faces 3, 4.

The application of the chemically reducing substance may also be carried out in one operating step with the production of the pinching connection. This is advantageous when the chemically reducing substance 6 is intended to remain in the connection. Such a chemically reducing substance which is applied in a permanent manner prevents one of the contact faces 3, 4 from oxidising again during the service-life of the component or prevents the hollow spaces which occur in pinch connections from becoming contaminated. A connection which has good, permanent electrically conductive properties is consequently ensured. If the chemically reducing substance 6 is not intended to remain in the connection, it can be readily removed after the active step. In particular the fact that the chemically reducing substance 6 may be applied only to a single contact element 1, 2 facilitates such a cleaning operation. For example, both contact elements 1, 2 can be treated with the chemically reducing substance 6 before the connection step and the contact elements 1, 2 can subsequently be freed from the chemically reducing substance 6 so that the completed component does not contain the chemically reducing substance 6.

It is preferably possible to use acids as a chemically reducing substance 6. In addition to the chemical reduction of the oxide layer, these acids etch the contact face 3, 4, whereby the surface is roughened and the cold welding density is additionally increased. Furthermore, acids provide free charge carriers, for example, ions, whereby the electrical conductivity between the two contact faces 3, 4 is ensured.

In a particularly advantageous embodiment of the method, organic acids are used as a chemically reducing substance 6. Organic acids are in most cases less harmful for humans and the environment since they are less toxic and have a lower acid strength. Since organic acids often occur naturally, energy-intensive and cost-intensive production is not necessary. Furthermore, organic acids can often be more easily processed and stored.

Since organic acids in most cases have a less aggressive effect, only the thin oxide layers are reduced on the metal, whilst the metals remain protected. Selective control of the effect is thereby possible when using organic acids, in particular when they permanently remain in the connection location. Examples of such organic acids are palm oil acid, fatty acid, pimelic acid, adipic acid, glutaric acid, malonic acid and Bernstein acid. In particular, it is also possible to use mixtures of these acids.

In a particularly advantageous embodiment of the method, long-chained organic acids are used. In contrast to shorter organic acids, these are odourless and, owing to their long-chained structure, cream-like or wax-like, which facilitates the processing and lasting retention in the connection location.

The chemically reducing substance 6 may be in various aggregate states. For example, it may be fluid, which enables application by means of dipping technology and subsequent removal from the connection location. With specific production methods, however, it may be advantageous for the chemically reducing substance 6 to be in a solid form. In particular, it is also possible for the substance to be cream-like or wax-like, which may facilitate the processing, since it then remains bonded to the contact face 3, 4 and does not drip off or evaporate. If the substance remains permanently in the connection location, a permanent contact is ensured by this consistency. In order to achieve this desired consistency, additional substances may be added to the chemically reducing substance 6, for example, thickening agents or solvents may increase or decrease the consistency.

For a defined effect or in order to save material, the substance may be diluted. In order to achieve additional effects, other substances which carry out other functions may be added to the substance or the solvent. For instance, these additions may thus further increase the electrical conductivity by providing free charge carriers or they may have a degreasing effect.

The effect of the chemically reducing substance 6 may be further increased by substances being used which comprise a plurality of chemically reducing functional groups. For example, polyprotic acids can be used.

Since the contact elements 1, 2 often comprise metals, it is advantageous for the chemically reducing substance 6 to be only weakly acidic or alkaline, that is to say, to have a pH value of from 4.5 to 9.5. These metals are thereby prevented from being attacked by the substance.

In an advantageous embodiment of the method, the chemically reducing substance 6 is a fluxing agent. Since fluxing agents are already widespread in electrics and electronics, the properties thereof, in particular interactions with various metals, are well known. There are a large variety of various fluxing agents for various materials and material combinations, and for various application fields. The fluxing agent can thus be adapted to the materials used and the planned application. Since fluxing agents are often also used in other production steps, no additional chemically reducing agent needs to be used. This reduces the use of the materials, the storage costs and the operational complexity.

In particular if the chemically reducing substance 6 is intended to remain in the connection, it is advantageous for it to be electrically conductive. This also ensures an electrical connection at locations at which there is no direct contact between the contact faces 3, 4. The electrical conductivity between the contact elements 1, 2 is thus further improved.

In a particularly advantageous embodiment of the method, the chemically reducing substance 6 is encapsulated in submillimetre or submicrometre balls which break open under pressure, as occurs, for example, during pinching or crimping. Owing to this encapsulation, the active ingredient acts only on the contact faces, which keeps the load for other components low and prevents unnecessary use of materials. Another reaction of the chemically reducing substance 6, for example, with other reaction partners, or accelerated ageing is also thereby prevented.

It is particularly advantageous for the substance to have already been applied to one of the contact faces 3, 4 in a previous process step. This may be carried out, for example, by the substance being contained in punching oil which is used in the production of a contact element 1, 2.

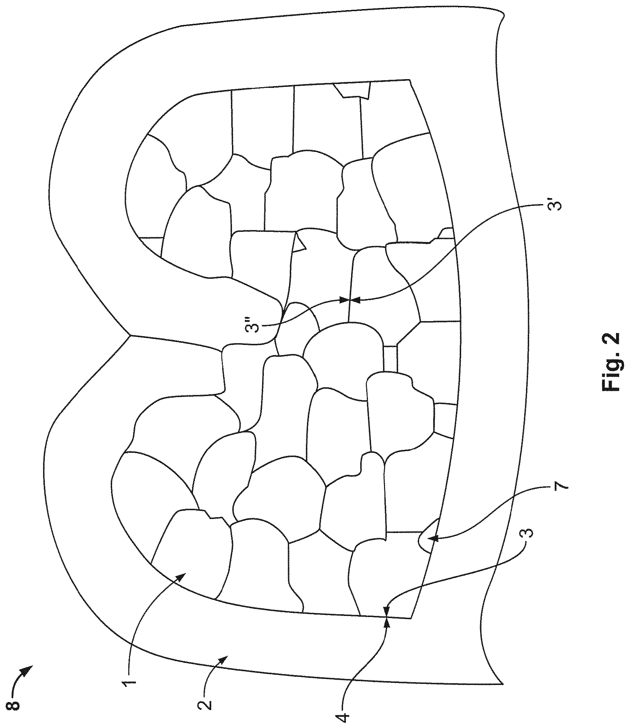

Figure 2 is a cross-section through a connection between two contact elements, which has been produced using the method according to the invention. The first contact element 1 is formed by a strand 1b and is surrounded by the second contact element 2, in this instance in the form of a crimp element 2a. The second contact element 2 was plastically deformed by a force and clamps the first contact element 1. The individual wires 1a of the strand 1b are also plastically deformed so that most contact faces of the wires 3 abut the contact faces of the second contact element 4 in a positive-locking or non-positive-locking manner. Owing to the previous use of the method according to the invention, the cold welding density at the interface between the contact face of the first contact element 3 and the contact face of the second contact element 4 is increased since they have been activated by the method according to the invention and adhere better to one another. In addition to the stronger connection between the first contact element 1 and the second contact element 2, the connection between two wires 1a of the first contact element 1 can also be improved. In particular if the entire strand 1b is processed using the method according to the invention, the connection between a first contact face 3' and a second contact face 3" of the first contact element is also improved. In order to save time and material, it is also possible to process only the outer side of the strand 1b using the method according to the invention.

Since hollow spaces 7 remain in the strand 1b in spite of the plastic deformation of the individual wires 1a, the strand 1b can become oxidised again from such locations owing to the infiltration of oxygen in the air. Infiltration of dirt or fluids is also possible in this instance. In order to prevent this, in a particularly advantageous configuration of the method the chemically reducing substance 6 is applied in a cream-like consistency to one of the contact elements 1, 2 prior to the connection step and the two contact elements 1, 2 are subsequently connected to each other by means of pinching. Owing to the cream-like consistency, the chemically reducing substance 6 is introduced into these hollow spaces 7 and remains there permanently, whereby long-term protection from oxidation, contamination and the infiltration of fluids is ensured. Owing to the use of only slightly aggressive substances, it can be ensured that only the oxide layers, but not the metals from which the contact elements are composed, are attacked.

In order to save the operating step of application, the chemically reducing substance may have already been applied to the contact faces 3, 4 of one of the contact elements 1, 2 in other operating steps. For example, the chemically reducing substance 6 may be contained in punching oil, which is used to punch a crimp contact from a sheet. In particular, the substance may have already been applied during the production of one of the contact elements.

In order to allow the chemically reducing substance 6 to act only on the contact faces 3, 4 during the pinching step, in a particularly advantageous embodiment of the method according to the invention the chemically reducing substance 6 is contained in submillimetre or submicrometre balls which break open only on application of mechanical pressure and add the chemically reducing substance 6 contained therein. Owing to the encapsulation, the chemically reducing substance 6 is additionally prevented from reacting in any other manner before the active step.

As an alternative to the above-mentioned methods for improving the transition resistance or in order to further improve this transition resistance, at least one of the contact faces can be cleaned and activated by means of plasma beam cleaning.

Figure 2 is also a schematic cross-section of a component 8, which has been produced using the method according to the invention. In this instance, there is a chemically reducing substance 6 on the contact faces 3, 4 between the two contact elements 1, 2 or in the hollow spaces 7. In particular, organic acids, fluxing agents, or submillimetre or submicrometre balls may be contained in the chemically reducing substance 6.

## Claims

1. Method for producing an electrical connection by means of plastic deformation between at least one contact face of a first contact element (1), for example, a wire (1a) or a strand (1b), and the contact face (4) of a second contact element (2), wherein the first contact element (1) and the second contact element (2) comprise materials with the same redox potential, **characterised in that** a chemically reducing substance (6) is applied to at least one of the contact faces (3, 4).

2. Method according to claim 1, **characterised in that** the chemically reducing substance (6) is an acid.

3. Method according to claim 2, **characterised in that** the acid is an organic acid.

4. Method according to any one of claims 1 to 3, **characterised in that** the chemically reducing substance (6) is a fluxing agent.

5. Method according to any one of claims 1 to 4, **characterised in that** the substance is encapsulated in submillimetre or submicrometre balls which are at least partially broken open in the plastically deformed state of one contact face.

6. Electrical component which contains at least two contact elements (1, 2) each having at least one contact face (3, 4), respectively, at least one contact element (1, 2) having been plastically deformed, wherein the first contact element (1) and the second contact element (2) comprise materials with the same redox potential, **characterised in that** a chemically reducing substance is present at least on a portion of a contact element.

7. Electrical component according to claim 6, **characterised in that** the chemically reducing substance is an acid.

8. Electrical component according to claim 6 or claim 7, **characterised in that** the chemically reducing substance is an organic acid.

9. Electrical component according to any one of claims 6 to 8, **characterised in that** the chemically reducing substance is a fluxing agent.

10. Electrical component according to any one of claims 6 to 9, **characterised in that** there are embedded in the chemically reducing substance submillimetre or submicrometre balls which break open under pressure.

## Patentansprüche

1. Verfahren zum Herstellen einer elektrischen Verbindung zwischen wenigstens einer Kontaktfläche eines ersten Kontaktelementes (1), beispielsweise eines Drahtes (1a) oder einer Litze (1b), und der Kontaktfläche (4) eines zweiten Kontaktelementes (2) mittels plastischer Verformung, wobei das erste Kontaktelement (1) und das zweite Kontaktelement (2) Materialien mit dem gleichen Redoxpotential umfassen, **dadurch gekennzeichnet, dass** eine chemisch reduzierende Substanz (6) auf wenigstens eine der Kontaktflächen (3, 4) aufgebracht wird.

2. Verfahren nach Anspruch 1, **dadurch gekennzeichnet, dass** die chemisch reduzierende Substanz (6) eine Säure ist.

3. Verfahren nach Anspruch 2, **dadurch gekennzeichnet, dass** die Säure eine organische Säure ist.

4. Verfahren nach einem der Ansprüche 1 bis 3, **dadurch gekennzeichnet, dass** die chemisch reduzierende Substanz (6) ein Flussmittel ist.

5. Verfahren nach einem der Ansprüche 1 bis 4, **dadurch gekennzeichnet, dass** die Substanz in Submillimeter- oder Submikrometer-Kugeln eingekapselt wird, die in dem plastisch verformten Zustand einer Kontaktfläche wenigstens teilweise aufgebrochen sind.

6. Elektrisches Bauelement, das wenigstens zwei Kontaktelemente (1, 2) mit jeweils wenigstens einer Kontaktfläche (3, 4) enthält, wobei wenigstens ein Kontaktelement (1, 2) plastisch verformt worden ist, das erste Kontaktelement (1) und das zweite Kontaktelement (2) Materialien mit dem gleichen Redoxpotential umfassen, **dadurch gekennzeichnet, dass** wenigstens an einem Abschnitt eines Kontaktelementes eine chemisch reduzierende Substanz vorhanden ist.

7. Elektrisches Bauelement nach Anspruch 6, **dadurch gekennzeichnet, dass** die chemisch reduzierende Substanz (6) eine Säure ist.

8. Elektrisches Bauelement nach Anspruch 6 oder Anspruch 7, **dadurch gekennzeichnet, dass** die chemisch reduzierende Substanz (6) eine organische Säure ist.

9. Elektrisches Bauelement nach einem der Ansprüche 6 bis 8, **dadurch gekennzeichnet, dass** die chemisch reduzierende Substanz (6) ein Flussmittel ist.

10. Elektrisches Bauelement nach einem der Ansprüche 6 bis 9, **dadurch gekennzeichnet, dass** in der chemisch reduzierenden Substanz Submillimeter- oder Submikrometer-Kugeln eingebettet sind, die unter Druck aufbrechen.

## Revendications

1. Procédé pour produire une connexion électrique par déformation plastique entre au moins une face de contact d'un premier élément de contact (1), par exemple un fil (1a) ou un brin (1b), et la face de contact (4) d'un deuxième élément de contact (2), le premier élément de contact (1) et le deuxième élément de contact (2) comprenant des matériaux avec le même potentiel redox, **caractérisé en ce qu'**une substance (6) réductrice chimiquement est appliquée sur l'une au moins des faces de contact (3, 4).

2. Procédé selon la revendication 1, **caractérisé en ce que** la substance (6) réductrice chimiquement est un acide.

3. Procédé selon la revendication 2, **caractérisé en ce que** l'acide est un acide organique.

4. Procédé selon l'une quelconque des revendications 1 à 3, **caractérisé en ce que** la substance (6) réductrice chimiquement est un agent fluxant.

5. Procédé selon l'une quelconque des revendications 1 à 4, **caractérisé en ce que** la substance est encapsulée dans des billes de taille submillimétrique ou submicrométrique qui sont au moins partiellement ouvertes en se brisant dans l'état déformé plastiquement d'une face de contact.

6. Composant électrique qui contient au moins deux éléments de contact (1, 2) ayant chacun respectivement au moins une face de contact (3, 4), au moins un élément de contact (1, 2) ayant subi une déformation plastique, le premier élément de contact (1) et le deuxième élément de contact (2) comprenant des matériaux avec le même potentiel redox, **caractérisé en ce qu'**une substance chimiquement réductrice est présente sur au moins une partie d'un élément de contact.

7. Composant électrique selon la revendication 6, **caractérisé en ce que** la substance chimiquement réductrice est un acide.

8. Composant électrique selon la revendication 6 ou la revendication 7, **caractérisé en ce que** la substance chimiquement réductrice est un acide organique.

9. Composant électrique selon l'une quelconque des revendications 6 à 8, **caractérisé en ce que** la substance réductrice chimiquement est un agent fluxant.

10. Composant électrique selon l'une quelconque des revendications 6 à 9, **caractérisé en ce que** sont incorporées, dans la substance réductrice chimiquement, des billes de taille submillimétrique ou submicrométrique qui s'ouvrent en se brisant sous l'effet d'une pression.
